# EUROPEAN PATENT APPLICATION

(11) **EP 2 881 859 A1**
(43) Date of publication of application: **10.06.2015**
(21) Application number: 14187131.9
(22) Date of filing: 30.09.2014
(51) Int. Cl.: G06F 9/445

(54) **AIRCRAFT CONFIGURATION AND SOFTWARE PART MANAGEMENT USING A CONFIGURATION SOFTWARE PART**

(30) Priority: 05.12.2013 US 201314097982
(71) Applicant: The Boeing Company, Chicago, IL 60606-2016 (US)
(72) Inventor: Angus, Ian Gareth, CHIGACO, 60606-2016 (US); Walker, Olga C., CHIGACO, 60606-2016 (US)
(74) Representative: Cabinet Plasseraud

(57) **Abstract**

A system and method of using a configuration software part for an aircraft. A processor unit on the aircraft identifies software parts for the aircraft from a list of approved software parts for an approved software configuration for the aircraft in the configuration software part. The approved software configuration for the aircraft is identified in the configuration software part and the configuration software part is stored on the aircraft. The processor unit on the aircraft determines whether the software parts identified in the configuration software part are on the aircraft.

## Description

### BACKGROUND

The present disclosure relates generally to aircraft and, in particular, to software aircraft parts and the configuration of software on an aircraft. Still more particularly, the present disclosure relates to a method and apparatus for managing software aircraft parts and the software configuration of an aircraft using a software part for the aircraft that defines an approved software configuration for the aircraft.

Modern aircraft are extremely complex. For example, an aircraft may have many types of electronic systems on board. An electronic system on an aircraft may be a line-replaceable unit (LRU). A line-replaceable unit is designed to be easily replaceable. A line-replaceable unit may be replaced when the aircraft is in flight or while the aircraft is on the ground.

An electronic system may take on various forms. An electronic system on an aircraft may be, for example, without limitation, a flight management system, an autopilot, an in-flight entertainment system, a communications system, a navigation system, a flight controller, a flight recorder, and a collision avoidance system. The various electronic systems on an aircraft may communicate with each other via digital airplane networks.

Electronic systems may use software or programming to provide the logic or control for various operations and functions. The software used in these electronic systems is commonly treated as parts in the airline industry. In particular, a software application for use in a line-replaceable unit on an aircraft may be tracked separately from the line-replaceable unit itself. Aircraft software that is treated as an aircraft part may be referred to as a loadable software aircraft part, an aircraft software part, or simply as a software part. A software part may be considered part of the configuration of an aircraft, rather than part of the hardware which operates the software.

Aircraft operators are entities that operate aircraft. Examples of aircraft operators include airlines and military units. Aircraft operators may be responsible for the maintenance and repair of aircraft. Maintenance and repair of an aircraft may include loading software parts on the aircraft.

Software parts are typically already installed in the electronic systems on an aircraft when an aircraft operator receives an aircraft. For example, software parts for the electronic systems may be provided by the aircraft manufacturer and installed on the aircraft by the aircraft manufacturer before the aircraft is delivered to the operator. The aircraft operator may also receive copies of these loaded software parts in case the parts need to be reinstalled or reloaded into the electronic systems on the aircraft. Reloading of software parts may be required, for example, if a line-replaceable unit in which the software is used is replaced or repaired.

An aircraft operator also may receive updates to the software parts from the aircraft manufacturer from time to time. These updates may include additional features not present in the currently-installed software parts and may be considered upgrades to one or more electronic systems. These updates also may be loaded on the aircraft by the aircraft operator.

An aircraft operator also may provide software parts for an aircraft. Operator provided software parts may be loaded on the aircraft by the aircraft manufacturer before the aircraft is delivered to the operator. Operator provided software parts also may be loaded on the aircraft by the operator after delivery. For example, operator software parts that were installed on the aircraft by the manufacturer may need to be reloaded on the aircraft in some cases. Updates to the operator software parts also may be loaded on the aircraft by the operator from time to time.

Specified procedures may be followed by the operator of an aircraft during loading of manufacturer and operator provided software parts on an aircraft so that the current configuration of the aircraft is known. The software configuration of an aircraft includes all of the software parts loaded on the aircraft.

It may be desirable both to know the current software configuration of an aircraft and to know that the current software configuration of the aircraft has been approved by the aircraft manufacturer, the aircraft operator, or both. For example, regulatory agencies may require an aircraft operator to ensure that the configuration of an aircraft is known and meets approval. However, current systems and methods may not provide for the effective and efficient management of the software configuration of a modern aircraft.

Effective and efficient software part management is also desirable. Software part management for a modern aircraft may include managing a large number of manufacturer and operator provided software parts both in preparation for loading the software parts on an aircraft and after the software parts have been loaded on the aircraft. For example, modern aircraft have the capability to store software parts on the aircraft before the software parts are installed on various aircraft systems. Storing various software parts on the aircraft facilitates accessibility to the software parts when installation of the software parts on the aircraft systems is required. Effective management of the storage of software parts on the aircraft is desirable for efficient maintenance of the aircraft. Current systems and methods do not provide for the effective and efficient management of software parts for modern aircraft when the aircraft software parts are stored on the ground, before being loaded on an aircraft, or when the software parts are stored on the aircraft.

Accordingly, it would be beneficial to have a method and apparatus that takes into account one or more of the issues discussed above, as well as possibly other issues.

### SUMMARY

The illustrative embodiments of the present disclosure provide a method of using a configuration software part for an aircraft. A processor unit on the aircraft identifies software parts for the aircraft from a list of approved software parts for an approved software configuration for the aircraft in the configuration software part. The approved software configuration for the aircraft is identified in the configuration software part and the configuration software part is stored on the aircraft. The processor unit on the aircraft determines whether the software parts identified in the configuration software part are on the aircraft.

The illustrative embodiments of the present disclosure also provide an apparatus comprising a storage device on an aircraft, a configuration software part for the aircraft, and a configuration manager on the aircraft. The configuration software part for the aircraft is stored in the storage device on the aircraft. The configuration software part identifies an approved software configuration for the aircraft and comprises a list of approved software parts for the approved software configuration for the aircraft. The configuration manager on the aircraft is configured to identify software parts from the list of approved software parts in the configuration software part stored in the storage device on the aircraft and determine whether the software parts identified in the list of approved software parts in the configuration software part are on the aircraft.

The illustrative embodiments of the present disclosure also provide a method of providing a configuration software part for an aircraft. A processor unit receives, from a manufacturer of the aircraft, a manufacturer identification certificate, information identifying an approved manufacturer software configuration for the aircraft, a list of approved manufacturer software parts for the aircraft for the approved manufacturer software configuration, and cryptographic values for the approved manufacturer software parts. The processor unit also receives, from an operator of the aircraft, an operator identification certificate, information identifying an approved operator software configuration for the aircraft, a list of approved operator software parts for the aircraft for the approved operator software configuration, and cryptographic values for the approved operator software parts. The processor unit combines the manufacturer identification certificate, the information identifying the approved manufacturer software configuration for the aircraft, the list of approved manufacturer software parts for the approved manufacturer software configuration, the cryptographic values for the approved manufacturer software parts, the operator identification certificate, the information identifying the approved operator software configuration for the aircraft, the list of approved operator software parts for the approved operator software configuration, and the cryptographic values for the approved operator software parts to form the configuration software part for the aircraft. The configuration software part is provided for delivery to the aircraft by the processor unit.

The features, functions, and benefits can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives, and benefits thereof, will best be understood by reference to the following detailed description of illustrative embodiments of the present disclosure when read in conjunction with the accompanying drawings, wherein:
**Figure 1** is an illustration of a block diagram of an aircraft configuration and software part management environment in accordance with an illustrative embodiment;
**Figure 2** is an illustration of a block diagram of a configuration software part in accordance with an illustrative embodiment;
**Figure 3** is an illustration of a current configuration software part and a previous configuration software part on an aircraft in accordance with an illustrative embodiment;
**Figure 4** is an illustration of a block diagram of another configuration software part in accordance with an illustrative embodiment;
**Figure 5** is an illustration of a block diagram of yet another configuration software part in accordance with an illustrative embodiment;
**Figure 6** is an illustration of information flow for the generation and use of a configuration software part in accordance with an illustrative embodiment;
**Figure 7** is an illustration of a flowchart of a process for generating a configuration software part in accordance with an illustrative embodiment;
**Figure 8** is an illustration of a flowchart of an offboard process for managing software parts for an aircraft using a configuration software part in accordance with an illustrative embodiment;
**Figure 9** is an illustration of a flowchart of a process for loading a configuration software part on an aircraft in accordance with an illustrative embodiment;
**Figure 10** is an illustration of a flowchart of an onboard process for managing software parts for changing a configuration of an aircraft using a configuration software part in accordance with an illustrative embodiment;
**Figure 11** is an illustration of a flowchart of a process for determining whether the software configuration of an aircraft is approved using a configuration software part in accordance with an illustrative embodiment;
**Figure 12** is an illustration of a flowchart of a process for handling a software part received by an aircraft using a configuration software part in accordance with an illustrative embodiment;
**Figure 13** is an illustration of a flowchart of a process for removing unneeded software parts from an aircraft using a configuration software part in accordance with an illustrative embodiment; and
**Figure 14** is an illustration of block diagram of a data processing system in accordance with an illustrative embodiment.

### DETAILED DESCRIPTION

The different illustrative embodiments recognize and take into account a number of different considerations. "A number," as used herein with reference to items, means one or more items. For example, "a number of different considerations" are one or more different considerations.

The different illustrative embodiments recognize and take into account that current configuration and software part management processes are substantially manual. For example, determining whether the software configuration of an aircraft matches an approved software configuration is currently done manually. There is currently no automatic checking of consistency between software parts on an aircraft. Currently, software parts to be loaded on an aircraft are manually selected and unneeded software parts are removed from the aircraft manually.

The different illustrative embodiments also recognize and take into account that the number of software parts on an aircraft is increasing as aircraft become more electronically enabled. Therefore, the tasks of configuration and software part management are increasing in complexity and current manual processes for configuration and software part management are increasingly inadequate.

The different illustrative embodiments recognize and take into account that continued integrity checking of software parts on an aircraft is currently done with specialized single function tables or is not done at all. Furthermore, current systems and methods for integrity checking of software parts may be based on a one size fits all model in which all software parts are treated equally without regard to criticality or certification status.

The different illustrative embodiments recognize and take into account that, currently, integrity checking of software parts is completely unrelated to maintaining the conformity of the software configuration of an aircraft with an approved configuration. For example, current systems and methods allow a software part to be loaded on an aircraft when an integrity check determines that the software part is from a trusted source and has not been corrupted. Current systems and methods do not recognize whether the software part is not included in an approved software configuration for the aircraft and thus should not be loaded on the aircraft.

The different illustrative embodiments recognize and take into account the dependency between attaining conformity of the software configuration of an aircraft to an approved software configuration and the management of software parts for the aircraft. The different illustrative embodiments use a configuration software part for an aircraft to improve both software configuration management and software part management.

A configuration software part in accordance with an illustrative embodiment may include information defining a number of approved software configurations for an aircraft. The configuration software part may include lists of approved software parts for each of the approved software configurations for the aircraft. The configuration software part also may include configuration rules defining the conditions under which each of the approved software configurations may be used for the aircraft. The configuration software part may include separate portions for approved manufacturer configurations and approved operator configurations.

A configuration software part in accordance with an illustrative embodiment may be loaded on an aircraft and made a part of the software configuration of the aircraft in the same manner as other software parts for the aircraft. An approved software configuration identified in the configuration software part loaded on an aircraft may be different from the current software configuration of the aircraft. In this case, the configuration software part may be used to change the software configuration of the aircraft to match the approved software configuration in a more efficient and automated manner. For example, the configuration software part may be used to identify and obtain approved software parts that must be loaded on the aircraft in order for the software configuration of the aircraft to match the approved software configuration identified in the configuration software part.

A configuration software part in accordance with an illustrative embodiment may be used to provide improved and automated management of the software configuration of an aircraft and of the software parts on the aircraft. For example, a configuration software part in accordance with an illustrative embodiment may be used to determine whether the current software configuration of the aircraft matches an approved software configuration identified in the configuration software part. The configuration software part may be used to improve integrity checking of software parts by preventing software parts that are not included in an approved configuration from being loaded on the aircraft, even when a conventional integrity check determines that the software part is from a trusted source and is not corrupted. The configuration software part also may be used to identify software parts on the aircraft that are not included in an approved software configuration and to remove such unneeded software parts from the aircraft.

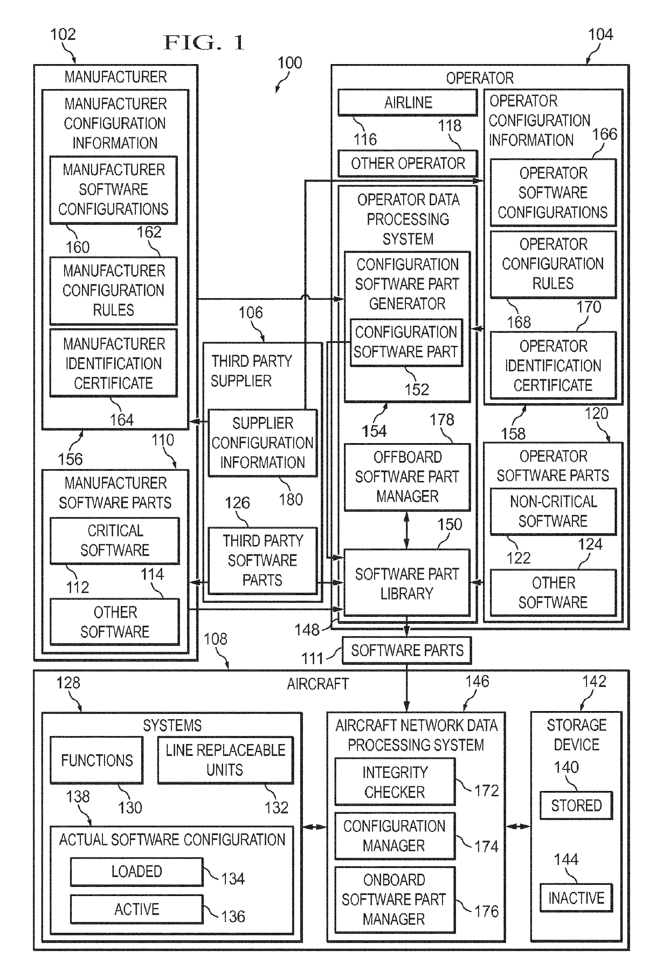

Turning now to **Figure 1****,** an illustration of a block diagram of an aircraft configuration and software part management environment is depicted in accordance with an illustrative embodiment. Aircraft configuration and software part management environment **100** may include manufacturer **102,** operator **104,** third party supplier **106,** and aircraft **108.**

Manufacturer **102** may be any appropriate entity that has the responsibility for building aircraft **108** and providing aircraft **108** to operator **104.** Manufacturer **102** may provide manufacturer software parts **110** for use on aircraft **108.** Manufacturer software parts **110** are an example of software parts **111** for aircraft **108.**

For example, without limitation, manufacturer software parts **110** may include critical software **112.** Critical software **112** may include software that is required for or otherwise may affect the safe operation of aircraft **108.** For example, without limitation, critical software **112** may include software that affects the requirements for airworthiness of an aircraft as set forth in Federal Aviation Regulations, Part 25, or other rules and regulations in the United States of America and other countries. Manufacturer software parts **110** may include other software **114.** Other software **114** may include software other than critical software **112.** For example, without limitation, other software **114** may include non-critical software.

Operator **104** may be any appropriate entity that is responsible for the operation of aircraft **108.** For example, operator **104** may be airline **116** or other operator **118.** For example, without limitation, other operator **118** may be a military organization or any other appropriate government or private entity or any appropriate combination of entities.

Operator **104** may provide operator software parts **120** for use on aircraft **108.** Operator software parts **120** are another example of software parts **111** for aircraft **108.** For example, without limitation, operator software parts **120** may include non-critical software **122.** Non-critical software **122** may include software that is desirable for the efficient operation of aircraft **108,** for the comfort of the passengers on aircraft **108,** or for any other purpose or combination of purposes. However, non-critical software **122** does not affect the safe operation of aircraft **108.** For example, without limitation, non-critical software **122** may include software that affects the operating requirements for an aircraft as set forth in Federal Aviation Regulations, Part 121, or in other rules and regulations in the United States of America and other countries. Operator software parts **120** also may include other software **124.**

In this illustrative example, third party supplier **106** may be an entity other than manufacturer **102** and operator **104** that provides third party software parts **126** for use on aircraft **108.** Third party software parts **126** are another example of software parts **111** for aircraft **108.**

Manufacturer **102** may or may not produce all of manufacturer software parts **110** provided by manufacturer **102** for use on aircraft **108.** For example, a portion of manufacturer software parts **110** may be produced by third party supplier **106** for manufacturer **102** or otherwise obtained by manufacturer **102** from third party supplier **106.** In this case, manufacturer software parts **110** may include third party software parts **126.**

Operator **104** may or may not produce all of operator software parts **120** provided by operator **104** for use on aircraft **108.** For example, a portion of operator software parts **120** may be produced by third party supplier **106** for operator **104** or otherwise obtained by operator **104** from third party supplier **106.** In this case, operator software parts **120** may include third party software parts **126.**

Aircraft **108** may be a commercial passenger aircraft, a cargo aircraft, a private or personal aviation aircraft, a military aircraft, or any other appropriate type of aircraft that may be used for any appropriate purpose. Aircraft **108** may include various systems **128** for performing various functions **130** on aircraft **108.** For example, without limitation, systems **128** may include line-replaceable units **132.**

Software parts **111** may be loaded **134** on systems **128** to implement functions **130** performed by systems **128.** Software parts **111** that are loaded **134** on systems **128** also may be referred to as active **136.** Software parts **111** that are loaded **134** and active **136** on systems **128** comprise actual software configuration **138** of aircraft **108.**

Software parts **111** also may be stored **140** in storage device **142** on aircraft **108.** Storage device **142** may include any number of appropriate hardware devices for storing software parts **111** on aircraft **108.** Storage device **142** also may be referred to as a mass storage device. For example, software parts **111** may be stored **140** in storage device **142** before being loaded **134** on systems **128.** Software parts **111** that are stored **140** in storage device **142** on aircraft **108** also may be referred to as inactive **144.** Software parts **111** that are stored **140** in storage device **142** and inactive **144** may not be considered to be part of actual software configuration **138** of aircraft **108.**

Communications between and among systems **128** and storage device **142** on aircraft **108** may be provided by aircraft network data processing system **146.** For example, without limitation, aircraft network data processing system **146** on aircraft **108** may be configured to receive software parts **111,** store software parts **111** in storage device **142,** and load software parts **111** from storage device **142** on systems **128.**

Software parts **111** may be loaded on aircraft **108** by manufacturer **102** before aircraft **108** is delivered to operator **104.** Software parts **111** also may be loaded on aircraft **108** after delivery to operator **104.** For example, without limitation, software parts **111** may be loaded on aircraft **108** to replace or update software parts **111** that were originally loaded on aircraft **108** by manufacturer **102.**

Software parts **111** may be loaded on aircraft **108** by operator **104** as part of the process of maintaining aircraft **108** by operator **104.** Alternatively, or in addition, software parts **111** may be loaded on aircraft **108** by another appropriate entity. For example, without limitation, software parts **111** may be loaded on aircraft **108** by a maintenance entity or another entity that maintains aircraft **108** for operator **104.**

For example, without limitation, operator data processing system **148** may be configured to receive manufacturer software parts **110** from manufacturer **102,** operator software parts **120** from operator **104,** and third party software parts **126** from third party supplier **106,** and to save manufacturer software parts **110,** operator software parts **120,** and third party software parts **126** in software part library **150.** Operator data processing system **148** may include any appropriate data processing system operated by, for, or on behalf of operator **104** to perform a number of functions of operator data processing system **148** as described herein. Software part library **150** may include any number of appropriate storage devices for storing software parts **111** at a location that is not on aircraft **108.** Software parts **111** in software part library **150** may be readily available for delivery to aircraft **108.** For example, without limitation, operator data processing system **148** may be configured to deliver software parts **111** from software part library **150** to aircraft **108** in any appropriate manner.

Any appropriate apparatus and method may be used to deliver software parts **111** to aircraft **108** from software part library **150** or another location. For example, without limitation, a human technician may use a maintenance device to retrieve software parts **111** for aircraft **108** from software part library **150,** another location, or a combination of locations. For example, the maintenance device may be a laptop computer or another appropriate portable data processing device. The retrieved software parts **111** may be stored on the maintenance device and the maintenance device then may be moved to aircraft **108.** A human technician may connect the maintenance device to aircraft network data processing system **146** on aircraft **108** via an appropriate wired or wireless connection. Software parts **111** then may be delivered to aircraft **108** by copying or otherwise moving software parts **111** from the maintenance device to aircraft network data processing system **146** on aircraft **108.**

Alternatively, or in addition, software parts **111** may be delivered to aircraft **108** without physically transporting software parts **111** to aircraft **108** on a maintenance device. For example, without limitation, software parts **111** may be delivered to aircraft **108** from software part library **150** via an appropriate wired or wireless connection between operator data processing system **148** and aircraft network data processing system **146** on aircraft **108.**

In accordance with an illustrative embodiment, actual software configuration **138** of aircraft **108** and software parts **111** for aircraft **108** may be managed in an effective and efficient manner using configuration software part **152.** Configuration software part **152** may be generated by or for operator **104** or any other entity or group of entities responsible for managing actual software configuration **138** of aircraft **108** and software parts **111** for use on aircraft **108.** Configuration software part **152** may be generated by configuration software part generator **154.** For example, without limitation, configuration software part generator **154** may be implemented in operator data processing system **148** or in another appropriate manner.

Configuration software part **152** may be saved in software part library **150** along with other software parts **111** for aircraft **108.** Configuration software part **152** may be delivered to aircraft **108** and loaded **134** on aircraft **108** in the same manner as other software parts **111** for aircraft **108.** Configuration software part **152** is part of actual software configuration **138** of aircraft **108** when configuration software part **152** is loaded **134** on aircraft **108.**

Configuration software part **152** may include information for determining the integrity of configuration software part **152,** information identifying a number of allowed software configurations for aircraft **108,** and configuration rules for determining which of the number of allowed software configurations should be used for aircraft **108** for particular conditions. Configuration software part **152** may include a list of approved software parts for each of the approved software configurations identified in configuration software part **152.** In the present application, including in the claims, a software configuration or a software part may be considered approved when the software configuration or software part is approved for use on an aircraft by an entity that has the authority to approve software configurations and software parts for the aircraft.

Configuration software part **152** may identify separate software configurations and software parts for aircraft **108** that are approved by manufacturer **102** of aircraft **108** and operator **104** of aircraft **108.** For example, without limitation, configuration software part **152** may be generated by combining manufacturer configuration information **156** from manufacturer **102** and operator configuration information **158** from operator **104.**

Manufacturer configuration information **156** may include information identifying manufacturer software configurations **160** for aircraft **108** and manufacturer configuration rules **162.** Manufacturer software configurations **160** may comprise configurations of manufacturer software parts **110** that are approved by manufacturer **102** for aircraft **108.** Manufacturer configuration rules **162** may include information for determining which of manufacturer software configurations **160** are approved for aircraft **108** under various conditions.

Manufacturer configuration information **156** also may include manufacturer identification certificate **164.** For example, manufacturer identification certificate **164** may be a public key certificate or a digital certificate for manufacturer configuration information **156.** Manufacturer identification certificate **164** may be used to verify that manufacturer configuration information **156** is from manufacturer **102** and has not been changed from its original form.

Operator configuration information **158** may include information identifying operator software configurations **166** for aircraft **108** and operator configuration rules **168.** Operator software configurations **166** may comprise configurations of operator software parts **120** that are approved by operator **104** for aircraft **108.** Operator configuration rules **168** may include information for determining which of operator software configurations **166** are approved for aircraft **108** under various conditions.

Operator configuration information **158** also may include operator identification certificate **170.** For example, operator identification certificate **170** may be a public key certificate or a digital certificate for operator configuration information **158.** Operator identification certificate **170** may be used to verify that operator configuration information **158** is from operator **104** and has not been changed from its original form.

Operator data processing system **148** may be configured to receive manufacturer configuration information **156** from manufacturer **102** and operator configuration information **158** from operator **104** and to provide manufacturer configuration information **156** to configuration software part generator **154** for use in generating configuration software part **152.** Configuration software part generator **154** may be configured to combine manufacturer configuration information **156** and operator configuration information **158** to generate configuration software part **152.**

Configuration software part **152** may be used for configuration and software part management on aircraft **108** by integrity checker **172,** configuration manager **174,** and onboard software part manager **176.** Integrity checker **172,** configuration manager **174,** and onboard software part manager **176** may be implemented in hardware or in a combination of hardware and software on aircraft **108.** For example, integrity checker **172,** configuration manager **174,** and onboard software part manager **176** may be implemented on aircraft network data processing system **146** on aircraft **108.**

Integrity checker **172** on aircraft **108** may be configured to validate the integrity of software parts **111** before software parts **111** are loaded **134** on aircraft **108.** Integrity checker **172** also may be configured to validate the integrity of configuration software part **152** before configuration software part **152** is used for configuration and software part management on aircraft **108.** Configuration software part **152** may be used by integrity checker **172** to prevent software parts **111** that are not for an approved software configuration from being loaded **134** on aircraft **108,** even when such software parts pass the other integrity checks performed by integrity checker **172.**

Configuration manager **174** on aircraft **108** may be configured to use configuration software part **152** to manage the software configuration of aircraft **108.** For example, configuration manager **174** may be configured to use configuration software part **152** to determine whether actual software configuration **138** of aircraft **108** matches an approved configuration for aircraft **108** identified in configuration software part **152.**

Onboard software part manager **176** on aircraft **108** may be configured to use configuration software part **152** to manage software parts **111** on aircraft **108.** For example, onboard software part manager **176** may be configured to determine whether approved software parts identified in configuration software part **152** are on aircraft **108** and to obtain approved software parts that are not on aircraft **108** for loading on aircraft **108.** Onboard software part manager **176** also may be configured to remove software parts **111** from systems **128** and storage device **142** on aircraft **108** when such software parts **111** are not identified as approved software parts for an approved software configuration in configuration software part **152.**

Configuration software part **152** also may be used to manage software parts **111** before software parts **111** are delivered to aircraft **108.** For example, offboard software part manager **178** may be configured to determine whether approved software parts identified in configuration software part **152** for aircraft **108** are available in software part library **150** for loading on aircraft **108.** Offboard software part manager **178** may be configured to obtain approved software parts that are not in software part library **150** for loading on aircraft **108.**

The illustration of **Figure 1** is not meant to imply physical or architectural limitations to the manner in which different illustrative embodiments may be implemented. Other components in addition to and/or in place of the ones illustrated may be used. Some components may be unnecessary in some illustrative embodiments. Also, the blocks are presented to illustrate some functional components. One or more of these blocks may be combined and/or divided into different blocks when implemented in different illustrative embodiments.

For example, configuration software part **152** may include configuration information other than or in addition to manufacturer configuration information **156** and operator configuration information **158.** For example, manufacturer configuration information **156,** operator configuration information **158,** or both, as included in configuration software part **152** may include supplier configuration information **180** provided by third party supplier **106.**

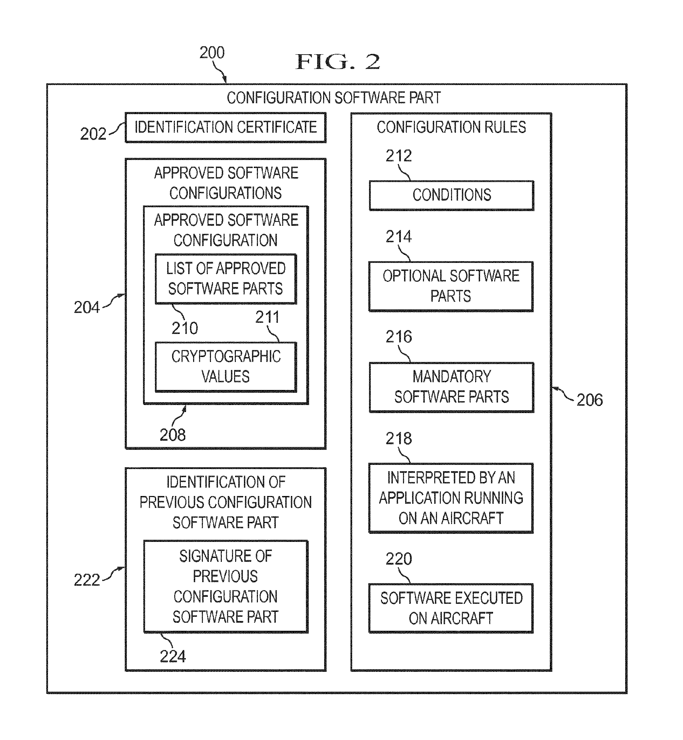

Turning to **Figure 2****,** an illustration of a block diagram of a configuration software part is depicted in accordance with an illustrative embodiment. Configuration software part **200** is an example of one implementation of configuration software part **152** in **Figure 1****.**

Configuration software part **200** may include identification certificate **202,** information identifying approved software configurations **204** for an aircraft, and configuration rules **206.** Identification certificate **202** includes information that may be used to verify that configuration software part **200** is from a trusted source. Each approved software configuration **208** in approved software configurations **204** may include a list of approved software parts **210** for approved software configuration **208** and cryptographic values **211** for the approved software parts. Cryptographic values **211** may include any appropriate values for validating the integrity of the approved software parts. For example, without limitation, cryptographic values **211** may include digital certificates or other appropriate information for validating the integrity of the approved software parts.

Configuration rules **206** may include information for determining which of approved software configurations **204** should be used for an aircraft for particular conditions **212.** For example, configuration rules **206** may identify optional software parts **214** and mandatory software parts **216** for approved software configurations **204** for particular conditions **212.** Configuration rules **206** may be implemented in any appropriate manner. For example, without limitation, configuration rules **206** may be implemented in an appropriate manner so as to be interpreted by an application running on an aircraft **218.** Alternatively, configuration rules **206** may be implemented in software that is executed on the aircraft **220.**

Configuration software part **200** also may include identification of previous configuration software part **222.** For example, without limitation, identification of previous configuration software part **222** may include signature of previous configuration software part **224** with identification certificate **202** for configuration software part **200.**

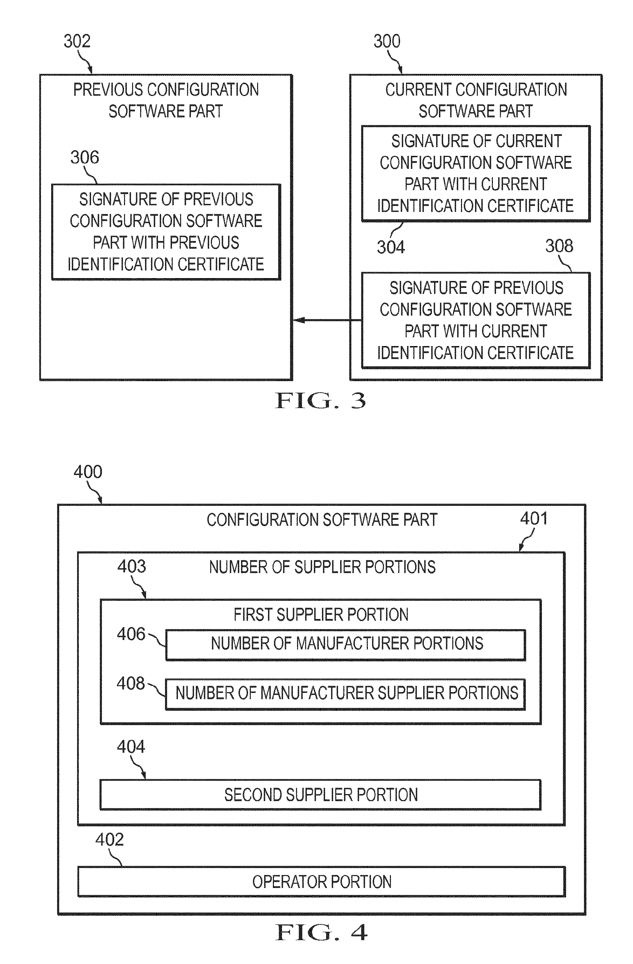

Turning to **Figure 3****,** an illustration of a current configuration software part and a previous configuration software part on an aircraft is depicted in accordance with an illustrative embodiment. Current configuration software part **300** and previous configuration software part **302** may be examples of configuration software part **200** in **Figure 2****.**

Current configuration software part **300** may identify the current software configuration of an aircraft. Current configuration software part **300** may include signature of current configuration software part with current identification certificate **304.**

Previous configuration software part **302** may identify one or more previous software configurations of the aircraft. Previous configuration software part **302** may include signature of previous configuration software part with previous identification certificate **306.**

Current configuration software part **300** may supersede previous configuration software part **302** to define the current software configuration of the aircraft. In some cases, however, it may be desirable to revert to the previous software configuration of the aircraft as defined by previous configuration software part **302.** For example, it may be desirable to revert to a previous software configuration when the current software configuration as defined by current configuration software part **300** is not operating in a desired manner or for another appropriate reason.

The previous identification certificate associated with previous configuration software part **302** may expire or otherwise become invalid. The identification certificate associated with previous configuration software part **302** may be updated by including signature of previous configuration software part with current identification certificate **308** in current configuration software part **300.** The current identification certificate then may be attached to previous configuration software part **302** for use in the event of reversion to the previous software configuration defined by previous configuration software part **302.**

Turning to **Figure 4****,** an illustration of a block diagram of another configuration software part is depicted in accordance with an illustrative embodiment. Configuration software part **400** may be an example of an implementation of configuration software part **152** in **Figure 1****.**

Configuration software part **400** may include a number of portions for various software configurations defined by various suppliers and by an operator of the aircraft. For example, configuration software part **400** may include number of supplier portions **401** and operator portion **402.** Number of supplier portions **401** may include one or more supplier portions. For example, without limitation, number of supplier portions **401** may include first supplier portion **403** and second supplier portion **404.** A configuration software part in accordance with an illustrative embodiment may include more than two supplier portions.

First supplier portion **403,** second supplier portion **404,** or both, may comprise a number of supplier portions in a nested manner. For example, without limitation, first supplier portion **403** may include number of manufacturer portions **406** and number of manufacturer supplier portions **408.**

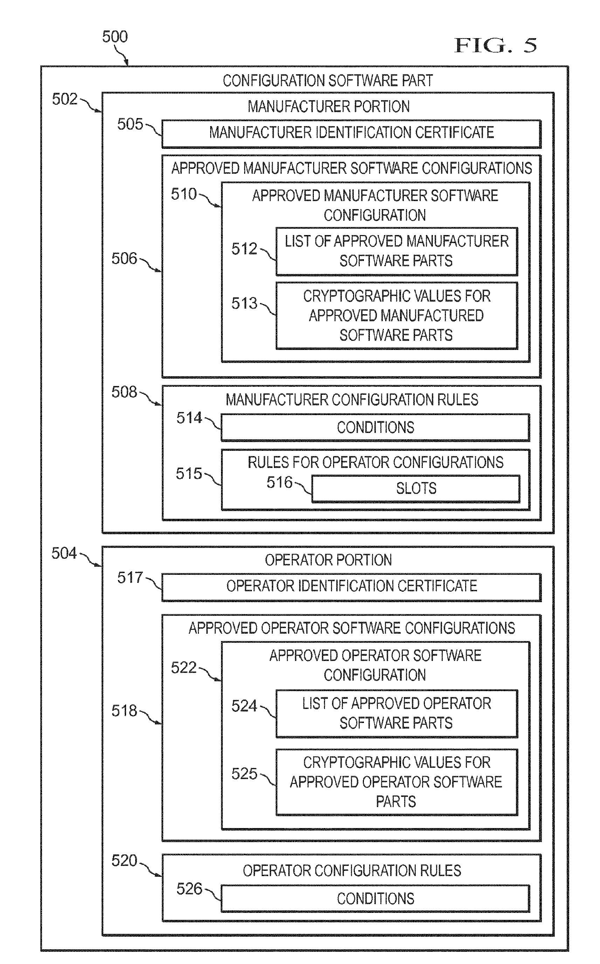

Turning to **Figure 5****,** an illustration of a block diagram of yet another configuration software part is depicted in accordance with an illustrative embodiment. Configuration software part **500** is another example of configuration software part **152** in **Figure 1****.** Configuration software part **500** may be an example of configuration software part **400** in **Figure 4****.** Configuration software part **500** may include manufacturer portion **502** and operator portion **504.**

Manufacturer portion **502** may include manufacturer identification certificate **505,** information identifying approved manufacturer software configurations **506** for an aircraft, and manufacturer configuration rules **508.** Each approved manufacturer software configuration **510** in approved manufacturer software configurations **506** may include list of approved manufacturer software parts **512.** Approved manufacturer software configuration **510** also may include cryptographic values for approved manufacturer software parts **513.**

Manufacturer configuration rules **508** may include information for determining which of approved manufacturer software configurations **506** are approved for the aircraft under various conditions **514.** Manufacturer configuration rules **508** also may include rules for operator configurations **515.** For example, without limitation, rules for operator configurations **515** may identify slots **516** where an aircraft operator may place some software parts of their own. Manufacturer configuration rules **508** may identify such operator software parts as optional or required.

Operator portion **504** may include operator identification certificate **517,** information identifying approved operator software configurations **518** for an aircraft, and operator configuration rules **520.** Each approved operator software configuration **522** in approved operator software configurations **518** may include list of approved operator software parts **524** and cryptographic values for approved operator software parts **525.** Operator configuration rules **520** may include information for determining which of approved operator software configurations **518** are approved for the aircraft under various conditions **526.**

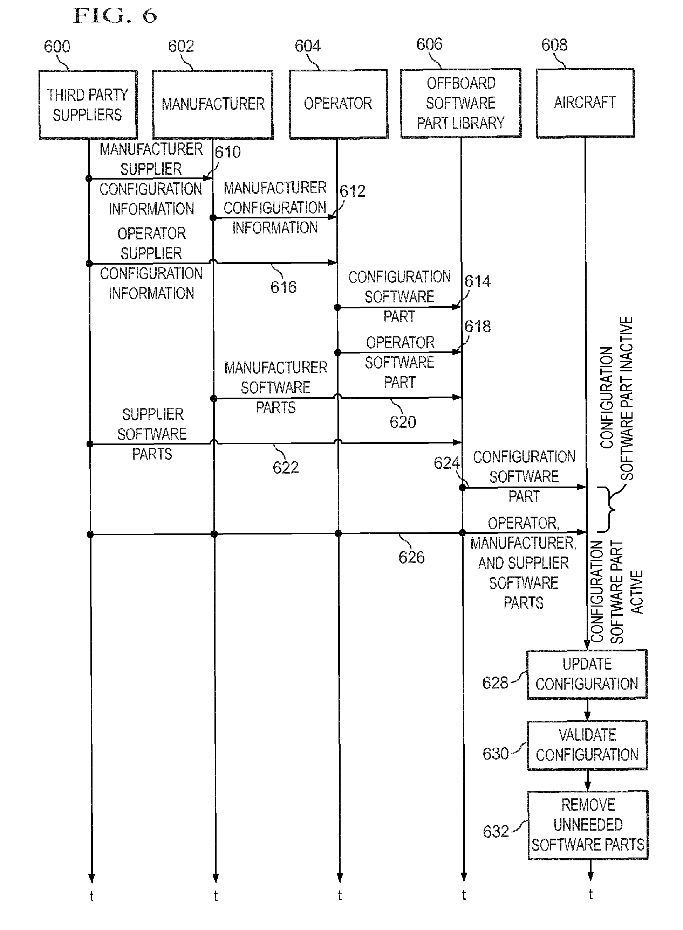

Turning to **Figure 6****,** an illustration of information flow for the generation and use of a configuration software part is depicted in accordance with an illustrative embodiment. An example of information flow between third party suppliers **600,** manufacturer **602,** operator **604,** offboard software part library **606,** and aircraft **608** is depicted in accordance with an illustrative embodiment.

Manufacturer supplier configuration information **610** may be provided from third party suppliers **600** to manufacturer **602.** Manufacturer supplier configuration information **610** may be included in manufacturer configuration information **612** by manufacturer **602.** Manufacturer configuration information **612** then may be provided from manufacturer **602** to operator **604.** Manufacturer configuration information **612** may be combined with operator configuration information by operator **604** to generate configuration software part **614.** The operator configuration information included in configuration software part **614** may include operator supplier configuration information **616** from third party suppliers **600.**

Configuration software part **614** may be provided from operator **604** to offboard software part library **606.** Configuration software part **614** may be used at offboard software part library **606** to determine whether operator software parts **618,** manufacturer software parts **620,** and supplier software parts **622** as identified in configuration software part **614** are available in offboard software part library **606.** Operator software parts **618,** manufacturer software parts **620,** and supplier software parts **622** identified in configuration software part **614** may be obtained and stored in offboard software part library **606** before configuration software part **624** is provided to aircraft **608.**

Configuration software part **624** may be inactive on aircraft **608** until it is determined that operator, manufacturer, and supplier software parts **626** identified in configuration software part **624** also are on aircraft **608.** Then configuration software part **624** may be made active. Configuration software part **624** on aircraft **608** then may be used to update configuration **628** of aircraft **608,** validate configuration **630** of aircraft **608,** and remove unneeded software parts **632** from aircraft **608.**

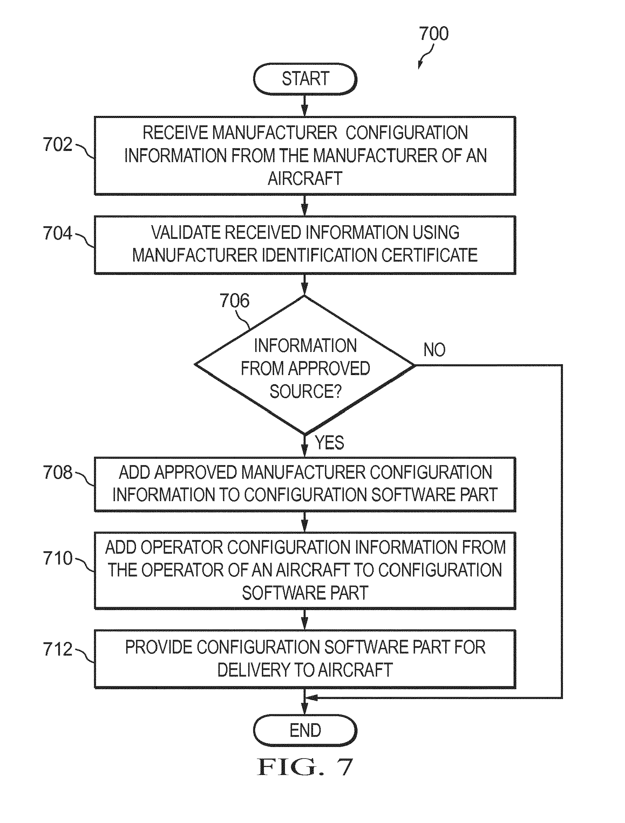

Turning to **Figure 7****,** an illustration of a flowchart of a process for generating a configuration software part is depicted in accordance with an illustrative embodiment. For example, process **700** may be implemented in configuration software part generator **154** to generate configuration software part **152** in **Figure 1****.**

Process **700** may begin by receiving manufacturer configuration information from the manufacturer of an aircraft (operation **702**)**.** The received manufacturer configuration information may be validated using a manufacturer identification certificate (operation **704**)**.** The validation may be performed to determine whether the manufacturer identification information is from an approved source (operation **706**). If the information is determined not to be from an approved source at operation **706,** the process may terminate. If the information is from an approved source, the manufacturer configuration information may be added to the configuration software part (operation **708**). Operator configuration information from an operator of the aircraft also may be added to the configuration software part (operation **710**)**.** The configuration software part then may be provided for delivery to an aircraft (operation **712**), with the process terminating thereafter. A process similar to process **700** may be used to generate the manufacturer portion of a configuration software part using supplier configuration information provided by a third party supplier.

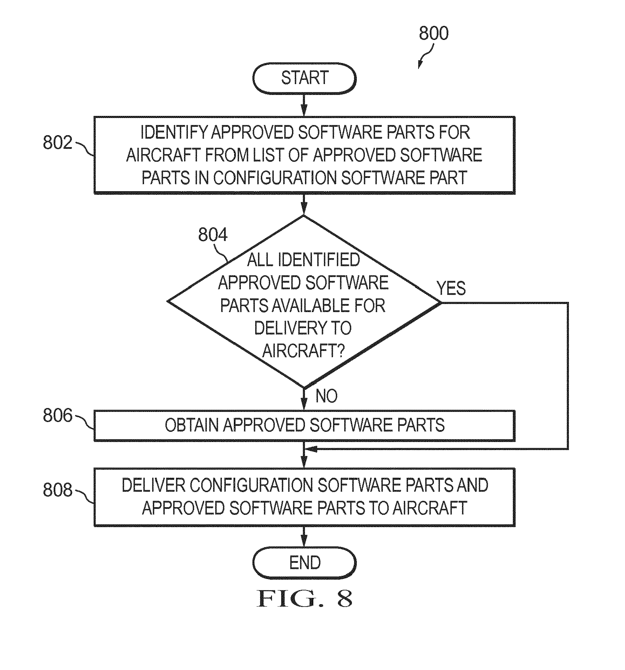

Turning to **Figure 8****,** an illustration of a flowchart of an offboard process for managing software parts for an aircraft using a configuration software part is depicted in accordance with an illustrative embodiment. For example, process **800** may be implemented in offboard software part manager **178** in **Figure 1****.**

Process **800** may begin by identifying approved software parts for an aircraft from a list of approved software parts in a configuration software part (operation **802**)**.** It then may be determined whether all approved software parts identified in the configuration software part are available for delivery to the aircraft (operation **804**)**.** If not, any approved software parts that are not available are obtained (operation **806**)**.** If it is determined at operation **804** that all approved software parts identified in the configuration software part are available, or after any approved software parts that are not available are obtained at operation **806,** the configuration software parts and approved software parts then may be delivered to the aircraft (operation **808**), with the process terminating thereafter. In this example, the configuration software part is not delivered to the aircraft until all of the software parts for a valid configuration for the aircraft are available.

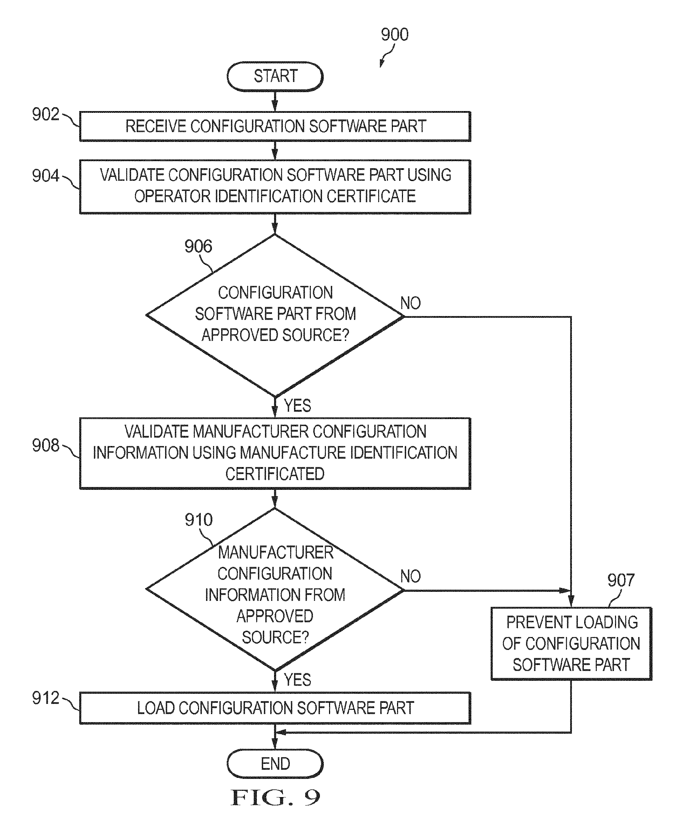

Turning to **Figure 9****,** an illustration of a flowchart of a process for loading a configuration software part on an aircraft is depicted in accordance with an illustrative embodiment. For example, process **900** may be performed by integrity checker **172** and configuration manager **174** on aircraft **108** in **Figure 1****.**

Process **900** begins with receiving a configuration software part on an aircraft (operation **902**)**.** The configuration software part then is validated using an identification certificate for the configuration software part that is received with the configuration software part (operation **904**)**.** For example, the identification certificate may be an operator identification certificate that is provided for the configuration software part by an operator of the aircraft. In this case, the operator identification certificate may be provided as an identification certificate for the configuration software part as a whole or for an operator portion of the configuration software part. In addition, or alternatively, a manufacturer certificate may be used to validate the configuration software part. For example, the manufacturer certificate may be provided by a manufacturer of the aircraft for a manufacturer portion of the configuration software part.

The validation of operation **904** is performed to determine whether the configuration software part is from an approved source (operation **906**). If the configuration software part is not from an approved source, loading of the configuration software part on the aircraft is prevented (operation **907**), with the process terminating thereafter. Otherwise, manufacturer configuration information in the configuration software part is validated (operation **908**)**.** Operation **908** is performed to determine whether the manufacturer configuration information is from an approved source (operation **910**)**.** If not, loading of the configuration software part on the aircraft is prevented at operation **907,** with the process terminating thereafter. Otherwise, the configuration software part is loaded on the aircraft (operation **912**), with the process terminating thereafter.

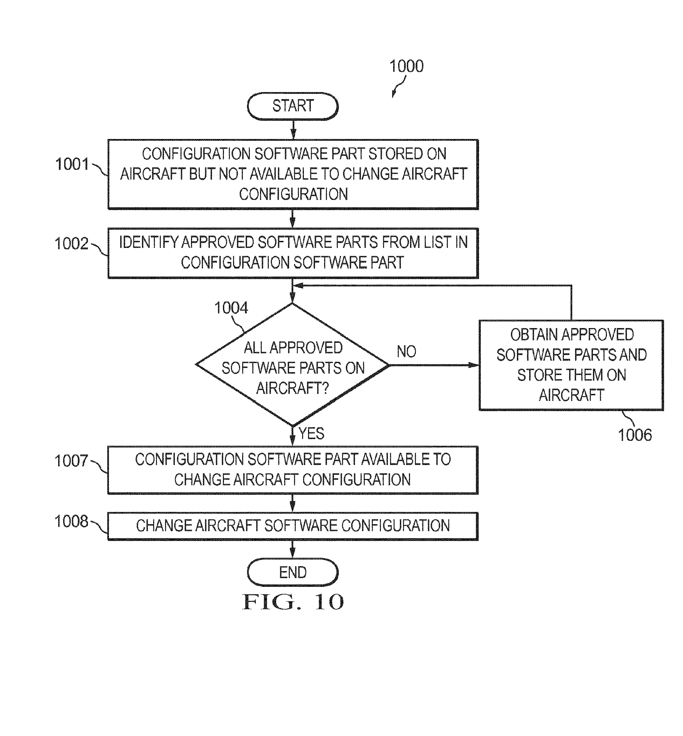

Turning to **Figure 10****,** an illustration of a flowchart of an onboard process for managing software parts for changing a configuration of an aircraft using a configuration software part is depicted in accordance with an illustrative embodiment. For example, process **1000** may be performed by onboard software part manager **176** and configuration manager **174** in **Figure 1****.**

Process **1000** begins with a configuration software part stored on an aircraft but not available to change the aircraft configuration (operation **1001**)**.** Approved software parts for an approved software configuration are identified from a list in the configuration software part and configuration rules in the configuration software part (operation **1002**)**.** It then may be determined whether all of the approved software parts are on the aircraft (operation **1004**)**.** If all of the approved software parts for the approved configuration are not on the aircraft, the approved software parts that are not on the aircraft are obtained and stored on the aircraft (operation **1006**)**.** Operations **1004** and **1006** may be repeated until it is determined that all approved software parts are on the aircraft. Then the configuration software part may be made available to change the configuration of the aircraft (operation **1007**)**.** The aircraft software configuration then may be changed to the configuration defined in the configuration software part (operation **1008**)**,** with the process terminating thereafter.

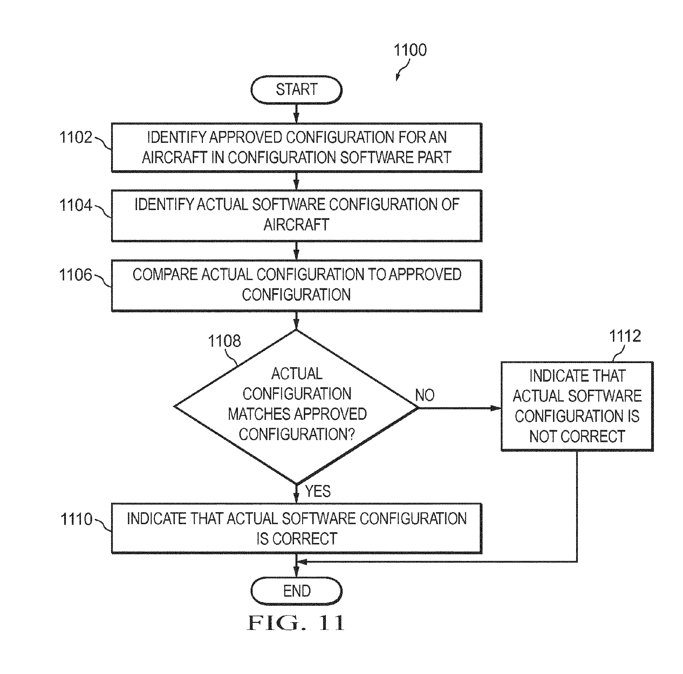

Turning to **Figure 11****,** an illustration of a flowchart of a process for determining whether the software configuration of an aircraft is approved using a configuration software part is depicted in accordance with an illustrative embodiment. For example, process **1100** may be performed by configuration manager **174** on aircraft **108** in **Figure 1****.**

Process **1100** begins by identifying an approved configuration for an aircraft in a configuration software part loaded on the aircraft (operation **1102**). The actual software configuration of the aircraft also is identified (operation **1104**)**.** The actual software configuration of the aircraft is compared to the approved software configuration (operation **1106**)**.** Based on the comparison made in operation **1106,** it is determined whether the actual software configuration of the aircraft matches the approved software configuration (operation **1108**)**.** An indication that the actual software configuration is correct is provided in response to a determination that the actual configuration matches the approved configuration (operation **1110**), with the process terminating thereafter. Otherwise, an indication that the actual software configuration is not correct is provided (operation **1112**), with the process terminating thereafter.

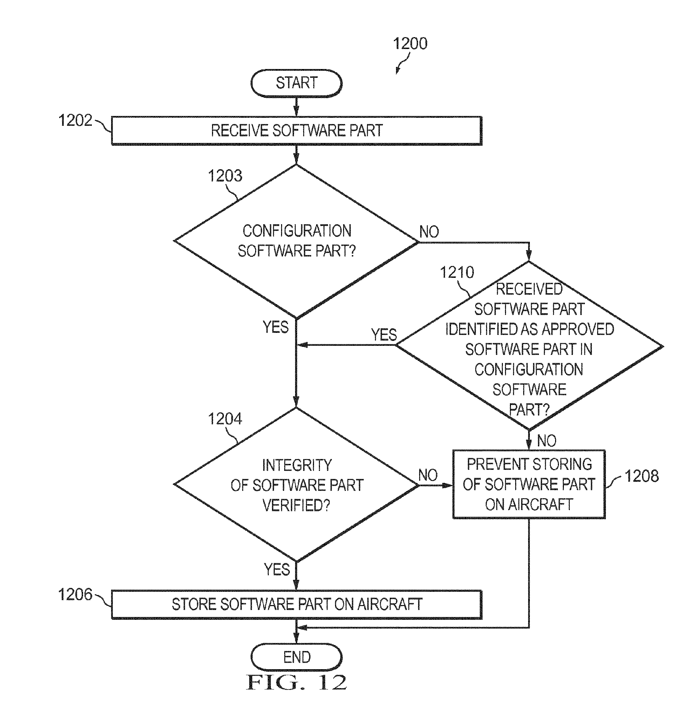

Turning to **Figure 12****,** an illustration of a flowchart of a process for handling a software part received by an aircraft using a configuration software part is depicted in accordance with an illustrative embodiment. For example, process **1200** may be performed by integrity checker **172** on aircraft **108** in **Figure 1****.**

Process **1200** begins with receiving a software part on an aircraft (operation **1202**). It is determined whether the software part is a configuration software part (operation **1203**)**.** In response to a determination that the software part is a configuration software part, it is determined whether the integrity of the software part is verified (operation **1204**)**.** If the integrity of the software part is verified, the software part is stored on the aircraft (operation **1206**), with the process terminating thereafter. Otherwise, the storing of the software part on the aircraft is prevented (operation **1208**), with the process terminating thereafter.

If it is determined at operation **1203** that the software part is not a configuration software part, it is determined whether the received software part is identified as an approved software part in a configuration software part loaded on the aircraft (operation **1210**). If the received software part is identified as an approved software part in the configuration software part, the integrity of the software part is verified at operation **1204** and stored at operation **1206** or prevented from being stored at operation **1208,** as appropriate, with the process terminating thereafter. Otherwise, storing of the software part on the aircraft is prevented at operation **1208,** with the process terminating thereafter.

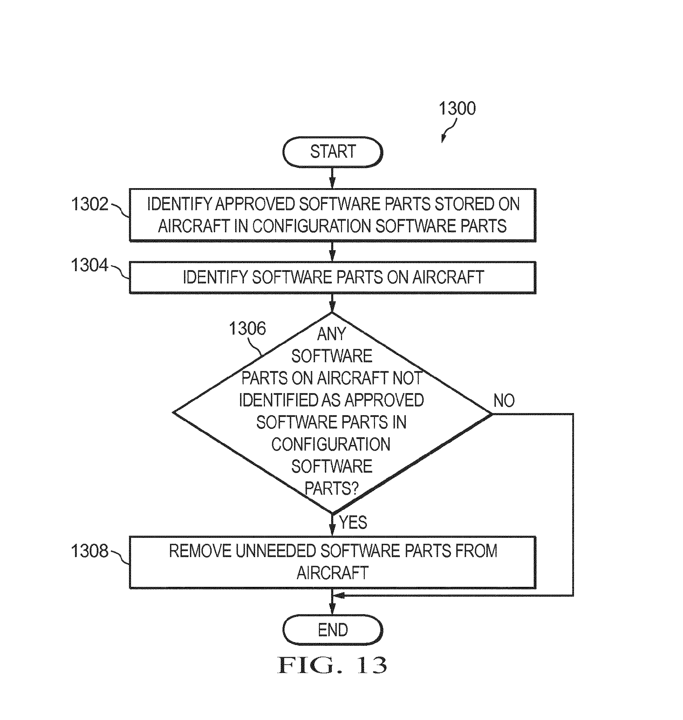

Turning to **Figure 13****,** an illustration of a flowchart of a process for removing unneeded software parts from an aircraft using a configuration software part is depicted in accordance with an illustrative embodiment. For example, process **1300** may be performed by onboard software part manager **176** on aircraft **108** in **Figure 1****.**

Process **1300** begins by identifying approved software parts in configuration software parts stored on the aircraft (operation **1302**)**.** All available configuration software parts on the aircraft may be used in operation **1302,** not just the current active configuration software part. In this manner, software parts for various configurations may be retained on the aircraft. An appropriate policy may be implemented to identify how many or which previous configuration software parts may be kept on the aircraft. Software parts on the aircraft are then identified (operation **1304**)**.** It then is determined whether any software parts on the aircraft are not identified as approved software parts in the configuration software parts (operation **1306**)**.** Any software parts that are not identified in the configuration software part are not needed and are removed from the aircraft (operation **1308**), with the process terminating thereafter.

The flowcharts and block diagrams in the different depicted embodiments illustrate the architecture, functionality, and operation of some possible implementations of apparatuses and methods in illustrative embodiments. In this regard, each block in the flowcharts or block diagrams may represent a module, segment, function, and/or a portion of an operation or step. For example, one or more of the blocks may be implemented as program code, in hardware, or a combination of program code and hardware. When implemented in hardware, the hardware may, for example, take the form of integrated circuits that are manufactured or configured to perform one or more operations in the flowcharts or block diagrams.

In some alternative implementations of an illustrative embodiment, the function or functions noted in the blocks may occur out of the order shown in the figures. For example, in some cases, two blocks shown in succession may be executed substantially concurrently, or the blocks may sometimes be performed in the reverse order, depending upon the functionality involved. Also, other blocks may be added in addition to the blocks illustrated in a flowchart or block diagram.

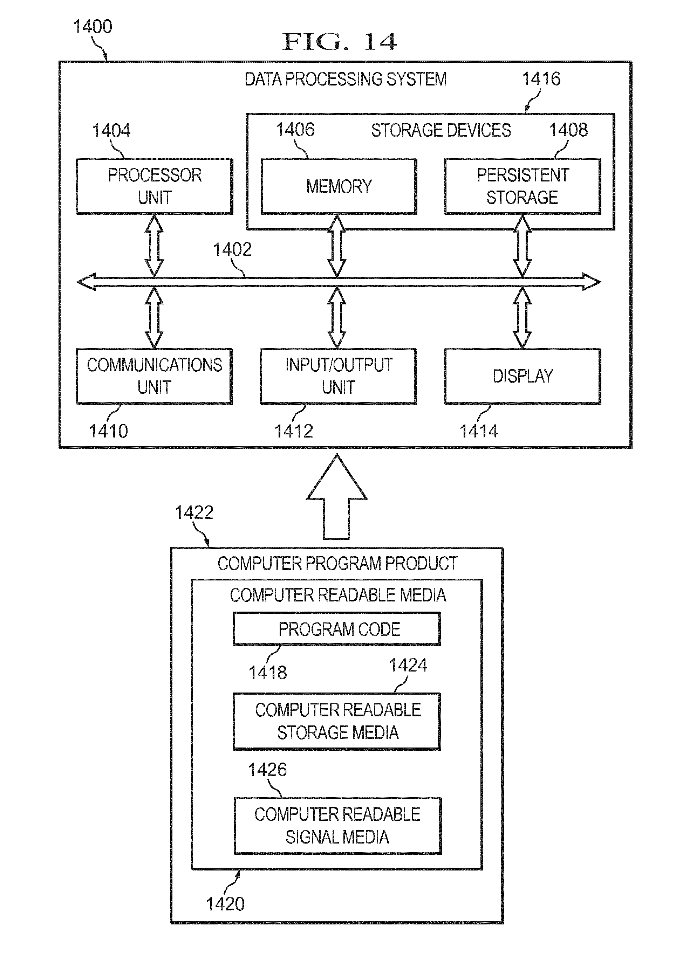

Turning to **Figure 14****,** an illustration of a block diagram of a data processing system is depicted in accordance with an illustrative embodiment. Data processing system **1400** may be an example of one implementation of aircraft network data processing system **146** on aircraft **108** in **Figure 1****.** Data processing system **1400** also may be an example of one implementation of operator data processing system **148** in **Figure 1****.**

In this illustrative example, data processing system **1400** includes communications fabric **1402.** Communications fabric **1402** provides communications between processor unit **1404,** memory **1406,** persistent storage **1408,** communications unit **1410,** input/output (I/O) unit **1412,** and display **1414.**

Processor unit **1404** serves to execute instructions for software that may be loaded into memory **1406.** Processor unit **1404** may be a number of processors, a multi-processor core, or some other type of processor, depending on the particular implementation. A number, as used herein with reference to an item, means one or more items. Further, processor unit **1404** may be implemented using a number of heterogeneous processor systems in which a main processor is present with secondary processors on a single chip. As another illustrative example, processor unit **1404** may be a symmetric multi-processor system containing multiple processors of the same type.

Memory **1406** and persistent storage **1408** are examples of storage devices **1416.** A storage device is any piece of hardware that is capable of storing information, such as, for example, without limitation, data, program code in functional form, and/or other suitable information either on a temporary basis and/or a permanent basis. Storage devices **1416** may also be referred to as computer readable storage devices in these examples. Memory **1406,** in these examples, may be, for example, a random access memory or any other suitable volatile or non-volatile storage device. Persistent storage **1408** may take various forms, depending on the particular implementation.

For example, persistent storage **1408** may contain one or more components or devices. For example, persistent storage **1408** may be a hard drive, a flash memory, a rewritable optical disk, a rewritable magnetic tape, or some combination of the above. The media used by persistent storage **1408** also may be removable. For example, a removable hard drive may be used for persistent storage **1408.**

Communications unit **1410,** in these examples, provides for communications with other data processing systems or devices. In these examples, communications unit **1410** is a network interface card. Communications unit **1410** may provide communications through the use of either or both physical and wireless communications links.

Input/output unit **1412** allows for input and output of data with other devices that may be connected to data processing system **1400.** For example, input/output unit **1412** may provide a connection for user input through a keyboard, a mouse, and/or some other suitable input device. Further, input/output unit **1412** may send output to a printer. Display **1414** provides a mechanism to display information to a user.

Instructions for the operating system, applications, and/or programs may be located in storage devices **1416,** which are in communication with processor unit **1404** through communications fabric **1402.** In these illustrative examples, the instructions are in a functional form on persistent storage **1408.** These instructions may be loaded into memory **1406** for execution by processor unit **1404.** The processes of the different embodiments may be performed by processor unit **1404** using computer-implemented instructions, which may be located in a memory, such as memory **1406.**

These instructions are referred to as program instructions, program code, computer usable program code, or computer readable program code that may be read and executed by a processor in processor unit **1404.** The program code in the different embodiments may be embodied on different physical or computer readable storage media, such as memory **1406** or persistent storage **1408.**

Program code **1418** is located in a functional form on computer readable media **1420** that is selectively removable and may be loaded onto or transferred to data processing system **1400** for execution by processor unit **1404.** Program code **1418** and computer readable media **1420** form computer program product **1422** in these examples. In one example, computer readable media **1420** may be computer readable storage media **1424** or computer readable signal media **1426.**

Computer readable storage media **1424** may include, for example, an optical or magnetic disk that is inserted or placed into a drive or other device that is part of persistent storage **1408** for transfer onto a storage device, such as a hard drive, that is part of persistent storage **1408.** Computer readable storage media **1424** also may take the form of a persistent storage, such as a hard drive, a thumb drive, or a flash memory, that is connected to data processing system **1400.** In some instances, computer readable storage media **1424** may not be removable from data processing system **1400.**

In these examples, computer readable storage media **1424** is a physical or tangible storage device used to store program code **1418** rather than a medium that propagates or transmits program code **1418.** Computer readable storage media **1424** is also referred to as a computer readable tangible storage device or a computer readable physical storage device. In other words, computer readable storage media **1424** is a media that can be touched by a person.

Alternatively, program code **1418** may be transferred to data processing system **1400** using computer readable signal media **1426.** Computer readable signal media **1426** may be, for example, a propagated data signal containing program code **1418.** For example, computer readable signal media **1426** may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some illustrative embodiments, program code **1418** may be downloaded over a network to persistent storage **1408** from another device or data processing system through computer readable signal media **1426** for use within data processing system **1400.** For instance, program code stored in a computer readable storage medium in a server data processing system may be downloaded over a network from the server to data processing system **1400.** The data processing system providing program code **1418** may be a server computer, a client computer, or some other device capable of storing and transmitting program code **1418.**

The different components illustrated for data processing system **1400** are not meant to provide architectural limitations to the manner in which different embodiments may be implemented. The different illustrative embodiments may be implemented in a data processing system including components in addition to or in place of those illustrated for data processing system **1400.** Other components shown in **Figure 14** can be varied from the illustrative examples shown. The different embodiments may be implemented using any hardware device or system capable of running program code. As one example, the data processing system may include organic components integrated with inorganic components and/or may be comprised entirely of organic components excluding a human being. For example, a storage device may be comprised of an organic semiconductor.

In another illustrative example, processor unit **1404** may take the form of a hardware unit that has circuits that are manufactured or configured for a particular use. This type of hardware may perform operations without needing program code to be loaded into a memory from a storage device to be configured to perform the operations.

For example, when processor unit **1404** takes the form of a hardware unit, processor unit **1404** may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, programmable array logic, a field programmable logic array, a field programmable gate array, and other suitable hardware devices. With this type of implementation, program code **1418** may be omitted, because the processes for the different embodiments are implemented in a hardware unit.

In still another illustrative example, processor unit **1404** may be implemented using a combination of processors found in computers and hardware units. Processor unit **1404** may have a number of hardware units and a number of processors that are configured to run program code **1418.** With this depicted example, some of the processes may be implemented in the number of hardware units, while other processes may be implemented in the number of processors.

In another example, a bus system may be used to implement communications fabric **1402** and may be comprised of one or more buses, such as a system bus or an input/output bus. Of course, the bus system may be implemented using any suitable type of architecture that provides for a transfer of data between different components or devices attached to the bus system.

Additionally, communications unit **1410** may include a number of devices that transmit data, receive data, or transmit and receive data. Communications unit **1410** may be, for example, a modem or a network adapter, two network adapters, or some combination thereof. Further, a memory may be, for example, memory **1406,** or a cache, such as found in an interface and memory controller hub that may be present in communications fabric **1402.**

The description of the different illustrative embodiments has been presented for purposes of illustration and description and is not intended to be exhaustive or to limit the embodiments in the form disclosed. Many modifications and variations will be apparent to those of ordinary skill in the art. Further, different illustrative embodiments may provide different benefits as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

Note: The following paragraphs describe further aspects of this disclosure.
A1. A method of providing a configuration software part (152) for an aircraft (108), comprising:
   receiving, by a processor unit (1404), from a manufacturer (102) of the aircraft (108), a manufacturer identification certificate (164), information identifying an approved manufacturer software configuration (510) for the aircraft (108), a list of approved manufacturer software parts (512) for the aircraft (108) for the approved manufacturer software configuration (510), and cryptographic values for the approved manufacturer software parts (513);
   receiving, by the processor unit (1404), from an operator (104) of the aircraft (108), an operator identification certificate (517), information identifying an approved operator software configuration (522) for the aircraft (108), a list of approved operator software parts (524) for the aircraft (108) for the approved operator software configuration (522), and cryptographic values for the approved operator software parts (525);
   combining, by the processor unit (1404), the manufacturer identification certificate (164), the information identifying the approved manufacturer software configuration (510) for the aircraft (108), the list of approved manufacturer software parts (512) for the approved manufacturer software configuration (510), the cryptographic values for the approved manufacturer software parts (513), the operator identification certificate (517), the information identifying the approved operator software configuration (522) for the aircraft (108), the list of approved operator software parts (524) for the approved operator software configuration (522), and the cryptographic values for the approved operator software parts (525) to form the configuration software part (152) for the aircraft (108); and
   providing the configuration software part (152) for delivery to the aircraft (108) by the processor unit (1404).
A2. The method of paragraph A1 further comprising:
   receiving, by the processor unit (1404), from the manufacturer (102) of the aircraft (108), manufacturer configuration rules (508) identifying first conditions (514) in which each of a plurality of approved manufacturer software configurations (506) is approved for the aircraft (108);
   receiving, by the processor unit (1404), from the operator (104) of the aircraft (108), operator configuration rules (520) identifying second conditions (526) in which each of a plurality of approved operator software configurations (518) is approved for the aircraft (108); and
   including, by the processor unit (1404), the manufacturer configuration rules (508), information identifying the plurality of approved manufacturer software configurations (506), the operator configuration rules (520), and information identifying the plurality of approved operator software configurations (518) in the configuration software part (152) for the aircraft (108).
A3. The method of paragraph A1 further comprising:
   determining, by the processor unit (1404), whether software parts (111) identified in one of the list of approved manufacturer software parts (512) and the list of approved operator software parts (524) in the configuration software part (152) is in a software part library (150) for providing the software part to the aircraft (108); and
   obtaining the software parts (111) and storing the software parts (111) in the software part library (150), by the processor unit (1404), in response to a determination that the software parts (111) are not in the software part library (150).
A4. The method of paragraph A1, wherein the configuration software part (152) for the aircraft (108) further comprises an identification of a number of previous configurations of the aircraft.
A4. The method of paragraph A3 further comprising:
   loading the configuration software part (152) on the aircraft (108) such that the configuration software part (152) comprises a part of an actual software configuration (138) of the aircraft (108);
   using the configuration software part (152) on the aircraft (108) to manage the actual software configuration (138) of the aircraft (108); and
   using the configuration software part (152) on the aircraft (108) to manage software parts (111) on the aircraft (108).
A5. The method of paragraph A4, further comprising attaching a current identification certificate to a previous configuration software part (302) stored on the aircraft (108).

## Claims

1. A method of using a configuration software part (152) for an aircraft (108), comprising:
identifying, by a processor unit (1404) on the aircraft (108), software parts (111) for the aircraft (108) from a list of approved software parts (210) for an approved software configuration (208) for the aircraft (108) in the configuration software part (152), wherein the approved software configuration (208) for the aircraft (108) is identified in the configuration software part (152) and the configuration software part (152) is stored on the aircraft (108); and
determining, by the processor unit (1404) on the aircraft (108), whether the software parts (111) identified in the configuration software part (152) are on the aircraft (108).

2. The method of claim 1, wherein the configuration software part (152) is part of an actual software configuration (138) of the aircraft (108).

3. The method of claims 1-2, wherein the configuration software part (152) comprises:
an identification certificate (202);
information identifying a plurality of approved software configurations (204) for the aircraft (108);
the list of approved software parts (210) for the aircraft (108) for each of the plurality of approved software configurations (204); and
configuration rules (206) identifying conditions (212) in which the each of the plurality of approved software configurations (204) is approved for the aircraft (108).

4. The method of claims 1-3, wherein the configuration software part (152) comprises a number of supplier portions (401) and an operator portion (402).

5. The method of claims 1-4 further comprising:
identifying, by the processor unit (1404) on the aircraft (108), an actual software configuration (138) of the aircraft (108); and
determining, by the processor unit (1404) on the aircraft (108), whether the actual software configuration (138) matches the approved software configuration (208) for the aircraft (108) identified in the configuration software part (152).

6. The method of claims 1-5 further comprising, in response to a determination that the software parts (111) are not on the aircraft (108):
obtaining the software parts (111) by the processor unit (1404) on the aircraft (108); and
storing the software parts (111) on the aircraft (108) by the processor unit (1404) on the aircraft (108).

7. The method of claims 1-6 further comprising:
identifying, by the processor unit (1404) on the aircraft (108), the software parts (111) on the aircraft (108);
determining, by the processor unit (1404) on the aircraft (108), whether the software parts (111) are identified in the list of approved software parts (210) for the approved software configuration (208) for the aircraft (108) in the configuration software part (152); and
removing the software parts (111) from the aircraft (108), by the processor unit (1404) on the aircraft (108), in response to a determination that the software parts are not identified in the list of approved software parts (210).

8. An apparatus, comprising:
a storage device (142) on an aircraft (108);
a configuration software part (152) for the aircraft (108) stored in the storage device (142), wherein the configuration software part (152) identifies an approved software configuration (208) for the aircraft (108) and comprises a list of approved software parts (210) for the approved software configuration (208) for the aircraft (108); and
a configuration manager (174) on the aircraft (108) configured to identify software parts (111) from the list of approved software parts (210) in the configuration software part (152) stored in the storage device (142) on the aircraft (108) and determine whether the software parts (111) identified in the list of approved software parts (210) in the configuration software part (152) are on the aircraft (108).

9. The apparatus of claim 8, wherein the configuration software part (152) is part of an actual software configuration (138) of the aircraft (108).

10. The apparatus of claims 8-9, wherein the configuration software part (152) comprises:
an identification certificate (202);
information identifying a plurality of approved software configurations (204) for the aircraft (108);
the list of approved software parts (210) for the aircraft (108) for each of the plurality of approved software configurations (204); and
configuration rules (206) identifying conditions (212) in which the each of the plurality of approved software configurations (204) is approved for the aircraft (108).

11. The apparatus of claims 8-10, wherein the configuration software part (152) comprises a number of supplier portions (401) and an operator portion (402).

12. The apparatus of claims 8-11, wherein the configuration manager (174) is configured to:
identify an actual software configuration (138) of the aircraft (108); and
determine whether the actual software configuration (138) matches the approved software configuration (208) for the aircraft (108) identified in the configuration software part (152).

13. The apparatus of claims 8-12, wherein the configuration manager (174) is configured to obtain the software parts (111) and store the software parts (111) in the storage device (142) in response to a determination that the software parts (111) are not on the aircraft (108).

14. The apparatus of claims 8-13, wherein the configuration manager (174) is configured to:
identify software parts (111) on the aircraft (108);
determine whether the software parts (111) are identified in the list of approved software parts (210) for the approved software configuration (208) for the aircraft (108) in the configuration software part (152); and
remove the software parts (111) from the aircraft (108) in response to a determination that the software parts (111) are not identified in the list of approved software parts (210).
